# EUROPÄISCHE PATENTSCHRIFT

(11) **EP 1 323 503 B1**
(45) Veröffentlichungstag und Bekanntmachung des Hinweises auf die Patenterteilung: **26.01.2011**
(21) Anmeldenummer: 02027884.2
(22) Anmeldetag: 13.12.2002
(51) Int. Cl.: B25J 19/06, B25J 13/08, B25J 19/00

(54) **Einrichtung und Verfahren zum Sichern von Vorrichtungen mit frei im Raum beweglichen Teilen**
Device and method for securing an apparatus with freely movable parts
Dispositif et méthode pour sécuriser un appareil possédant des parties mobiles libres

(30) Priorität: 19.12.2001 DE 10162412
(43) Veröffentlichungstag der Anmeldung: 02.07.2003
(60) Teilanmeldung: 06015847.4
(73) Patentinhaber: KUKA Roboter GmbH, 86165 Augsburg (DE)
(72) Erfinder: Heiligensetzer, Peter, 86159 Augsburg (DE); Steininger, Fritz, 75378 Bad Liebenzell (DE)
(74) Vertreter: Schlotter, Alexander Carolus Paul

(56) Entgegenhaltungen:
- DE-C- 3 715 693
- FR-A- 2 595 441
- JP-A- 6 278 081
- US-A- 5 744 728
- PATENT ABSTRACTS OF JAPAN vol. 1998, no. 14, 31. Dezember 1998 (1998-12-31) -& JP 10 249785 A (KAWASAKI HEAVY IND LTD), 22. September 1998 (1998-09-22)

## Beschreibung

Die Erfindung betrifft zum einen eine Sicherheitseinrichtung für Vorrichtungen mit frei im Raum beweglichen Teilen, insbesondere für Handhabungsgeräte wie Industrieroboter oder führerlose Transportgeräte, mit Schaltmitteln, die bei Kollision der bewegten Teile mit Personen oder Gegenständen ein Steuersignal bewirken, durch das die bewegten Teile stillsetzbar oder ein eine der Annäherungsbewegung entgegengesetzte Bewegungsfolge bewirkendes Notlaufprogramm in Gang setzbar sind und zum anderen ein Verfahren zum Sichern derartiger Vorrichtungen mittels der erfindungsgemäßen Einrichtung.

Generell dürfen Handhabungsgeräte, insbesondere Industrieroboter nur unter eng definierten Auflagen im Beisein von Personen betrieben werden. Deshalb weisen Sicherheitseinrichtungen für den Betrieb von Vorrichtungen mit frei im Raum beweglichen Teilen, insbesondere für Industrieroboter, bislang eine strikte Trennung der Arbeitsräume von Mensch und Maschine auf. Dabei werden in der Regel trennende Schutzeinrichtungen wie z.B. Zäune verwendet.

Falls ein Zugriff zum Arbeitsraum prozessbedingt nötig ist, werden bewegliche trennende Schutzeinrichtungen (wie z.B. Schutztüren oder Klappen) oder nicht-trennende Schutzeinrichtungen (wie z.B. Laserscanner, Schaltmatten; nach Schutz-Kategorie 3 oder 4, DIN EN 954-1) verwendet, die einen Zugriff des Arbeiters in den Arbeitsraum des Roboters während des aktiven Betriebs erkennen und ein Signal liefern, das einen Alarm auslöst oder die gefahrbringende Bewegung stoppt. Auch ein Handfahrbetrieb mit Zustimmtaste unter reduzierter Geschwindigkeit gehört zum Stand der Technik.

Die erwähnten Schaltmatten nutzen die physikalischen Effekte, die bei Verkrümmung eines Lichtwellenleiters auftreten. Eine entsprechende Vorrichtung ist aus der DE 44 28 650 A1 bekannt. Bei einem in einer Kontaktmatte angeordneten Lichtwellenleiter ändert sich bereits bei geringer Druckbeanspruchung die modale Verteilung des Strahlungsfeldes, so dass ein in geeigneter Weise angeordneter Lichtdetektor Druckkräfte mit hoher Empfindlichkeit messen kann.

Die CH 682 351 A5/EP 0 264 350 beschreibt eine der zahlreichen herkömmlichen Vorrichtungen, die zur Absicherung des Arbeitsbereichs von Anlagen zum Einsatz kommen. Sie offenbart eine prozessgesteuerte Anlage mit zugeordneter Überwachungsschaltung und einem Sicherheitskreis, der insbesondere eine Zutrittsampel und eine Tür aufweist, mittels derer der Zugang zum Nahbereich des Roboters reguliert bzw. dauernd überwacht wird, so dass für den Fall, dass sich eine Bedienperson im Nahbereich aufhält, nur ein Stillstand der Anlage bzw. ein Schleichbetrieb möglich ist.

Die EP 0 725 710 B1 beschreibt eine weitere Variante, bei der eine Bedienperson eine im Raum bewegliche Vorrichtung durch das Abfahren eines Miniaturmodels des zu bearbeitenden Objektes mit einem Miniaturmodell der Vorrichtung steuert. Druckschriftgemäß ist eine Sicherheitszone um die Vorrichtung herum dadurch definiert, dass das Miniaturmodell der Vorrichtung gegenüber dem Objektmodell einen leicht vergrößerten Maßstab aufweist. Kollisionen zwischen der (realen) Vorrichtung und dem Objekt sollen so "mit absoluter Sicherheit" ausgeschlossen sein. Zusätzliche Sicherheitseinrichtungen, die etwaige Kollisionen erkennen oder verhindern könnten, sind nicht offenbart.

Derartige Schutzeinrichtungen stellen einerseits einen erheblichen Kostenfaktor dar, zum anderen ist der Inbetriebnahme-Aufwand erheblich.

Die EP 0 012 383 offenbart eine Anlage mit beweglichen Teilen, die mit einer zwischen zwei Elektrodenschichten flächenhaft auf den bewegten Teilen der Anlage angeordneten, bei Druckbeanspruchung elektrisch leitfähigen Kunststoffschicht versehen ist. Darüber hinaus kann zwischen dem hieraus gebildeten Sensorsystem und den Anlagenteilen eine verformbare Schicht angeordnet sein.

Die EP 0 689 903 zeigt einen Roboter mit einem Überzug aus visko-elastischem Material, wobei auf der Oberfläche oder unter diesem Überzug Drucksensoren zum Erkennen von Kollisionen angeordnet sind.

Weiterhin ist ein kapazitives Sensorsystem aus der DE 40 06 119 C2 bekannt. Diese Druckschrift betrifft ein kapazitives Wegaufnehmersystem mit einem von außen beeinflussbaren Kondensator, der eine aktive Elektrode, eine Masseelektrode und eine zwischen der aktiven Elektrode und der Masseelektrode angeordnete Abschirmelektrode aufweist, die auf dem gleichen elektrischen Potential wie die aktive Elektrode liegt.

Eine ähnliche Vorrichtung ist auch aus der EP 0 518 836 A1 bekannt. Die WO 86/02506 betrifft einen Näherungsgeber kapazitiver Art zum Einsatz bei Fahrstuhltüren. Auch diese Druckschrift offenbart einen kapazitiven Sensor mit Drei-Elektroden-Anordnung, der darüber hinaus eine räumlich gerichtete Nachweisempfindlichkeit besitzt.

Derartige kapazitive Sensoren messen die Kapazitätsänderung, die durch das Annähern eines Gegenstandes im elektrischen Feld des durch den Sensor gebildeten Kondensators hervorgerufen wird. Kapazitive Sensoren detektieren neben allen elektrisch gut leitfähigen Materialien nur solche Materialien, deren Permittivität ausreichend groß ist.

Die Tatsache, dass ein kapazitives Sensorsystem nicht alle Arten von Materialien detektieren kann, ist gerade im Hinblick auf eine Verwendung als Sicherheitseinrichtung bei schnell bewegten Vorrichtungen mit massiven, frei im Raum bewegten Teilen als nachteilig anzusehen.

In diesem Zusammenhang ist ein Komplettsystem wünschenswert, das eine sichere Kooperation Mensch-Maschine ermöglicht.

Aus der JP 10- 249 785 A1 ist eine Vorrichtung nach dem Oberbegriff des Anspruchs 1 und ein Verfahren nach dem Oberbegriff des Anspruchs 27 bekannt.

Der Erfindung liegt die Aufgabe zugrunde, eine Sicherheitseinrichtung für den Betrieb von Vorrichtungen mit frei im Raum beweglichen Teilen zu schaffen, die den sicheren Betrieb solcher Vorrichtungen ohne aufwändige Peripherie-Einrichtungen ermöglicht und die darüber hinaus gewährleistet, dass Kollisionen zwischen Vorrichtungsteilen und Menschen oder Gegenständen frühzeitig und zuverlässig erkannt werden, so dass neben einer Vermeidung von Planungs- und Fertigungskosten ein erheblich reduzierter Platzbedarf für derartige Anlagen resultiert, so dass Mensch und Maschine zukünftig Arbeitsräume gemeinsam nutzen können.

Zur Lösung der Aufgabe sieht die Erfindung eine Sicherheitseinrichtung mit den Merkmalen des Anspruchs 1 vor.

Die Aufgabe wird weiterhin durch ein Verfahren mit den Merkmalen des Anspruchs 27 gelöst, bei dem bei Berührung eines beweglichen Teils der Vorrichtung eine durch auf diesem Teil angeordnete, ein taktiles Sensorsystem bildende Lichtwellenleiter geführte elektromagnetische Strahlung beeinflusst wird, wodurch mindestens ein Steuersignal zum Veranlassen mindestens einer sicherheitsrelevanten Aktion bewirkt wird.

Erfindungsgemäß werden die beim Stand der Technik erkannten Nachteile dadurch vermieden, dass ein bestimmtes taktiles Sensorsystem an den bewegten Teilen einer Vorrichtung installiert wird. Das taktile System spricht bei Berührung mit einer Person oder einem Gegenstand an. Das erfindungsgemäße taktile optische Sensorsystem mit Lichtwellenleitern läßt sich einfach an die nicht glatten Strukturen und Oberflächen bei einem Roboter anpassen. Außerdem ist hierdurch eine Sicherheit gegen elektromagnetische Störstrahlung gegeben, die zu keiner Fehlauslösung führen kann.

Das erfindungsgemäße taktile Sensorsystem, das in Form einer taktilen Haut ausgebildet ist, kann dabei direkt auf dem Gehäuse der Vorrichtung angeordnet sein. Um Beschädigungen durch mechanische Einwirkungen auszuschließen, ist nach einer bevorzugten Ausgestaltung vorgesehen, das taktile Sensorsystem nach außen durch eine stoßdämpfende teilelastische Schicht zu schützen.

Es ist erfindungsgemäß jedoch ebenfalls möglich, das taktile Sensorsystem außerhalb der das Gehäuse umgebenden stoßdämpfenden teilelastischen Schicht auf dieser anzuordnen, wodurch eine größere Nähe der Sensorik zum Gegenstand, der detektiert werden soll, erreicht wird.

Eine weitere Ausführungsform der erfinduzigegemäßen Lehre sieht daher vor, dass die die Gehäuseteile bzw. die Gehäuseteile und das taktile Sensorsystem umgebende Schicht federnd und dämpfend ausgebildet ist. Durch das Federn gewinnt man Anhalteweg, damit es nicht gleich nach dem ersten Berühren zu einem harten Schlag kommt. Besitzt die Schicht Dämpfungseigenschaften, so wird Bewegungsenergie abgebaut und die wirkende Kraft bleibt über einen längeren Weg begrenzt. Dies erlaubt es dem Anwender, die Vorrichtung schneller zu fahren. Zu diesem Zweck ist vorgesehen, die stoßdämpfende teilelastische Schicht aus einem Material mit einem mechanischen Wirkungsgrad zwischen 0,5 und 0,7, insbesondere mit einem mechanischen Wirkungsgrad von 0,6 auszubilden. In einer bevorzugten Ausgestaltung der Erfindung wird hierzu ein Polyurethan-Weichschaum verwendet, der große Teile der anfallenden Bewegungsenergie absorbiert und in Wärme umwandelt.

Die erfindungsgemäße Sicherheitseinrichtung zeichnet sich insbesondere durch ihre hohe Nachweisempfindlichkeit aus, da gemäß der Erfindung vorgesehen ist, dass das aus Lichtwellenleitern gebildete taktile Sensorsystem bereits ab einer Krafteinwirkung von 0,5 bis 1,5 N, insbesondere 1 N, anspricht.

Nach einer besonders bevorzugten Ausgestaltung der erfindungsgemäßen Lehre ist ein berührungsloses Sensorsystem vorgesehen. Insbesondere in Verbindung mit dem taktilen System läßt sich so ein redundantes Gesamtsystem schaffen, das beispielsweise bei Industrierobotern den Anforderungen der Kategorie 3/4 nach der Europäischen Norm DIN EN 954-1 genügt. Hierzu umfasst die Sicherheitseinrichtung ein weiteres von dem taktilen Sensorsystem unabhängiges Sensorsystem, durch das Menschen und andere Objekte mit hoher Permittivitätszahl berührungslos detektierbar sind und durch das bereits bei Annäherung - also vor einer Kollision - ein sicherheitsrelevantes Steuersignal ausgelöst wird.

Dieses weitere unabhängige Sensorsystem ist in vorteilhafter Ausgestaltung ein kapazitives Sensorsystem mit mindestens einem aus zwei oder mehr Elektroden gebildeten Sensorelement. Zum Einsatz kommen können insbesondere Drei-Elektroden-Systeme, die eine geerdete Elektrode, eine Sensorelektrode und eine zwischen letzteren angeordnete Schirmelektrode aufweisen. Hiermit werden Sensor-Reichweiten im Zentimeterbereich erreicht. Die Schirmelektrode ermöglicht insbesondere eine Richtwirkung des kapazitiven Sensors. Sie verringert die Streukapazitäten in Richtung Gehäuse und verbessert die Empfindlichkeit gegen Annäherung deutlich. Durch dieses zusätzliche System läßt sich die Gefahrerkennung weitgehend redundant gestalten. Auch lassen sich durch das kapazitive System Bereiche erfassen, bei denen eventuell das taktile System nicht zuverlässig anspricht. Außerdem lassen sich so Annäherungen schon im Vorfeld erfassen.

Wasser besitzt ein im Vergleich zu trockener Luft eine 81-fach erhöhte Permittivität εᵣ. Da der Mensch zu über zwei Dritteln seiner Masse aus Wasser besteht, kann er - insbesondere durch Flächenelektroden - bis zu einer Entfernung von über 10 cm zuverlässig erkannt werden.

Das aus einer Mehrzahl von Sensorelementen gebildete kapazitive Sensorsystem kann mehrere flächige Sensorelemente mit entsprechenden Flächenelektroden aufweisen. Diese Sensorelemente sind vorteilhafterweise sektorförmig unterteilt, was erlaubt, Sektoren einzeln oder gruppenweise auszublenden, sobald sich diese innerhalb einer von der Steuerung vorgesehenen erlaubten Position befinden. Damit lässt sich ein unerwünschtes Ansprechen des kapazitiven Sensorsystems für solche Fälle vermeiden, bei denen sich sicherheitsrelevante Bauteile erlaubterweise aufeinander zubewegen.

Zusätzlich hat das Aufteilen des kapazitiven Sensorsystems in Sektoren den weiteren Vorteil, dass daraus eine größere Anzahl an Elektroden resultiert, die jeweils eine kleinere Oberfläche als das Gesamtsystem aufweisen. Da die relative Kapazitätsänderung bei Annäherung ein und desselben Gegenstands mit kleiner werdender Elektrodenoberfläche ansteigt, wird die Sensorik dadurch empfindlicher, speziell gegen Annäherung kleiner Gegenstände.

Erfindungsgemäß ist weiterhin vorgesehen, die Elektroden des kapazitiven Sensorssystems asymmetrisch anzuordnen, wobei in äußerst vorteilhafter Ausgestaltung aufgebördelte Schirmelektroden Verwendung finden. Dadurch lässt sich unter Ausnutzung der Richtwirkung der einzelnen kapazitiven Sensorelemente erreichen, dass zumindest die bewegten Teile der Vorrichtung in ein geschlossenes Sensorfeld gehüllt sind.

Die Richtwirkung der einzelnen Sensorelemente lässt sich vorteilhafterweise auch dazu einsetzen, die unerwünschte Detektion von internen und externen elektromagnetischen Störquellen und die Detektion von maschinenseitigen Metallteilen oder von Teilen mit hoher Permittivitätszahl εᵣ zu unterdrücken.

In einer bevorzugten Ausgestaltung ist vorgesehen, zumindest Teile des kapazitiven Sensorsystems außerhalb des Gehäuses anzuordnen. Dies kann entweder direkt auf der Außenfläche des Gehäuses oder sogar auf der dämpfenden Schaumschicht geschehen. Dadurch lässt sich neben einer größeren Nähe zum zu detektierenden Gegenstand insbesondere auch ein größerer Abstand zu internen Störquellen, z.B. zur Leistungselektronik der Motoren, erreichen.

Es ist jedoch auch denkbar, Bestandteile des kapazitiven Sensorsystems innerhalb des Gehäuses der Vorrichtung anzuordnen. Dies ist insbesondere dann von Vorteil, wenn sich sicherheitsrelevante Bauteile der Vorrichtung sehr eng aneinander vorbeibewegen, wodurch aus Platzgründen die Montage jedweder Sensorsysteme auf der Oberfläche des Gehäuses ausgeschlossen ist. Im Zuge einer solchen Ausgestaltung ist das Gehäuse vorteilhafterweise aus einem Material mit niedriger Permittivitätszahl ausgebildet, was insbesondere durch die Verwendung von Kunststoff geschehen kann.

Nach einer weiteren bevorzugten Ausgestaltung der erfindungsgemäßen Lehre erfolgt die Anordnung des taktilen Sensorsystems, des kapazitiven Sensorsystems und der stoßdämpfenden teilelastischen Schicht in Form von jeweils lokal zum Gehäuse planparallelen Schichten, deren Abfolge auch bezüglich des Gehäuses beliebig variieren kann.

Vorteilhafterweise greifen die beiden unabhängigen Sensorsysteme, d.h. das taktile Sensorsystem und das kapazitive Sensorsystem, direkt in den NOT-AUS-Kreis der Vorrichtung ein. Darüber hinaus sind die gegebenenfalls bewirkten Steuersignale der beiden Sensorsysteme bevorzugterweise im Sinne einer logischen ODER-Verknüpfung verknüpft, d.h. es wird eine sicherheitsrelevante Aktion - beispielsweise ein Stillsetzen der Vorrichtung, ein Einleiten einer der Kollisionsbewegung entgegengesetzten Bewegungsfolge und/oder ein Auslösen eines optischen und/oder akustischen Alarms - veranlasst, wenn eines der beiden ODER beide Steuersignale bewirkt wurden.

Eine äußerst vorteilhafte Ausgestaltung der Erfindung sieht vor, dass alle Sensorflächen durch Abfahren eines Sicherheitsprogramms, insbesondere durch Annähern eines Probekörpers im Zuge einer Kontrollfahrt, sich zyklisch selbst kontrollieren.

Nach der erfindungsgemäßen Lehre ist es weiterhin möglich, das taktile und das kapazitive Sensorsystem mit einem dritten System, das als Motorstrom-Überwachungssystem zur Überwachung von Motorströmen in den in der Vorrichtung zum Bewegen der bewegten Teile vorhandenen Elektromotoren ausgebildet ist, zu kombinieren. Ein solches Motorstrom-Überwachungssystem registriert den Anstieg der Motorströme über den im kollisionsfreien Normalfall zu erwartenden Wert und löst in diesem Fall ein Steuersignal aus, durch das die gefahrbringende Bewegung gestoppt oder eine Gegenbewegung eingeleitet wird.

Es ist darüber hinaus möglich, die erfindungsgemäße Sicherheitseinrichtung mit einem Kraft-Momenten-Sensor zu kombinieren, der in bevorzugter Ausgestaltung zwischen der Vorrichtung und an der Vorrichtung angeordneten Werkzeugen vorgesehen ist und mit dessen Hilfe Kollisionen über das Auftreten unerwarteter Kräfte und Momente detektierbar sind.

Die beiden letztgenannten Systeme, d.h. das Motorstrom-Überwachungssystem und der Kraft-Momenten-Sensor, ergeben zusammen ebenfalls noch einmal ein separates redundantes System, das den Sicherheitsanforderungen nach DIN EN 954-1 Kategorie 2 genügt. Nach einer bevorzugten Ausgestaltung sind auch die Steuersignale dieser beiden Sensorsysteme im Sinne einer logischen ODER-Verknüpfung miteinander verknüpft.

Erfindungsgemäß ist weiterhin vorgesehen, die Sicherheitsfunktionen dieses separaten redundanten Systems durch ein Maschinen-Programm zu überprüfen, wobei die Vorrichtung gegen einen Widerstand gefahren wird. Solange das Motorstrom-Überwachungssystem und der Kraft-Momenten-Sensor unabhängig voneinander ein Überschreiten der Normwerte feststellen, ist das Gesamtsystem noch in Ordnung.

Bezüglich der verschiedenen Möglichkeiten, den Gegenstand der vorliegenden Erfindung in vorteilhafter Weise auszugestalten und weiterzubilden, sei einerseits auf die nachgeordneten Patentansprüche, andererseits auf die Erläuterung von Ausführungsbeispielen des Gegenstands anhand der Zeichnung verwiesen. In der Zeichnung zeigt:
- Fig. 1: in einer schematischen Schnittansicht ein Anordnungsbeispiel der Sensor- und Dämpfungsschichten bezüglich des Gehäuses der Vorrichtung;
- Fig. 2: in einer schematischen Darstellung eine zu überwachende Vorrichtung und die Sensoran-ordnung bei einem Ausführungsbeispiel des erfindungsgemäßen kapazitiven Sensorsystems;
- Fig. 3: in einem Ablaufdiagramm ein erfindungsgemäßes Sicherheitsprogramm zur zyklischen (Selbst-)Kontrolle aller Sensorflächen der Sicherheitseinrichtung;
- Fig. 4: in einem Ablaufdiagramm das Überwachen eines Bewegungszustandes der Vorrichtung durch das erfindungsgemäße Motorstrom-Überwachungssystem und
- Fig. 5: in einem Ablaufdiagramm die kombinierte Bewegungsüberwachung der Vorrichtung durch das Motorstrom-Überwachungssystem und den bzw. die erfindungsgemäß vorhandenen Kraft-Momenten-Sensoren.

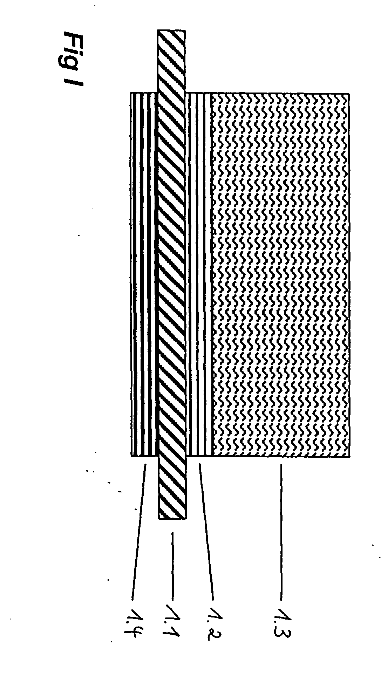

Figur 1 zeigt in einer schematischen Schnittansicht ein Beispiel für die mögliche Anordnung der Sensor- und Dämpfungsschichten der erfindungsgemäßen Sicherheitseinrichtung bezüglich des Gehäuses bzw. bezüglich Gehäuseteilen der Vorrichtung.

Ein Gehäuseteil 1.1 eines beweglichen Teils 2.2 der Vorrichtung 2.1, wie eines Roboterarms (Teil) eines Roboters (Vorrichtung), ist als (lokal) ebene Platte dargestellt. Oberhalb des Gehäuseteils 1.1, d.h. außerhalb der Vorrichtung 2.1 ist ein taktiles Sensorsystem 1.2 angeordnet, das beim gezeigten Ausführungsbeispiel nach außen hin durch eine stoßdämpfende teilelastische Schicht 1.3 geschützt ist. Unterhalb des Gehäuseteils 1.1, d.h. innerhalb der Vorrichtung 2.1 ist ein kapazitives Sensorsystem 1.4 vorgesehen, wobei die Anordnung des taktilen Sensorsystems 1.2, der Dämpfungsschicht 1.3 sowie des kapazitiven Sensorsystems 1.4 in bezüglich des Gehäuseteils 1.1 planparallelen übereinanderliegenden Schichten erfolgt.

Die Abfolge dieser Schichten kann bezüglich des Gehäuseteils 1.1 variieren. So ist es beispielsweise möglich, das kapazitive Sensorsystem 1.4 teilweise oder ganz außerhalb des Gehäuseteils 1.1 anzuordnen. Des Weiteren besteht die Möglichkeit, das taktile Sensorsystem 1.2 und/oder das kapazitive Sensorsystem 1.4 oder Teile davon außerhalb der Dämpfungsschicht 1.3 anzuordnen, um so den Abstand der Sensorsysteme zu einem zu detektierenden Objekt zu verringern.

Die Dämpfungsschicht 1.3 ist dabei bevorzugterweise in einem Material ausgebildet, das effektiv in der Lage ist, Bewegungsenergie durch Verformung zu dissipieren, so dass bei einer Kollision sowohl die Vorrichtung 2.1 selbst als auch der Kollisionspartner geschont wird.

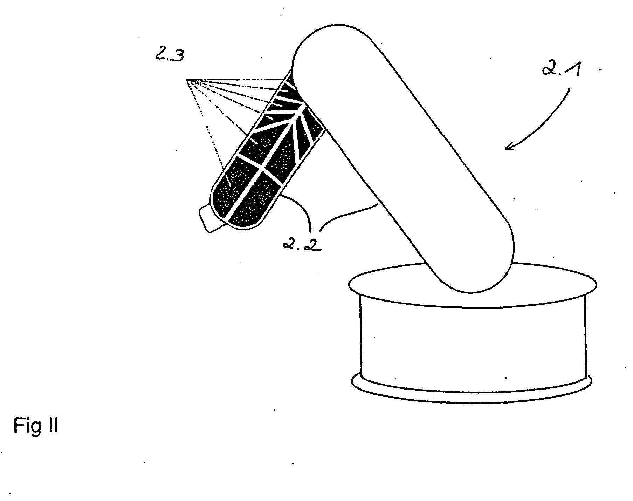

Figur 2 zeigt in einer schematischen Darstellung eine zu überwachende Vorrichtung 2.1 mit frei im Raum beweglichen Teilen 2.2 und die Anordnung von Sensoren des erfindungsgemäßen kapazitiven Sensorsystems 1.4.

Die schematische Darstellung einer Vorrichtung 2.1 beinhaltet eine Mehrzahl frei im Raum beweglicher Teile 2.2. Auf einem dieser bewegten Teile 2.2 sind einzelne, sektorförmig ausgebildete Sensorelemente 2.3 des kapazitiven Sensorsystems 1.4 dargestellt. Die einzelnen Sensorelemente 2.3 sind dabei flächenhaft und mit unterschiedlicher Geometrie ausgebildet.

Durch die Aufteilung einer kapazitiven Sensorfläche in eine Vielzahl kleinerer Sektoren 2.3 steigt die Nachweisempfindlichkeit des kapazitiven Sensorsystems 1.4. Des Weiteren kann mit Hilfe einer individuell ausgebildeten Richtcharakteristik der Sektoren 2.3 eine vollständige Einhüllung zumindest der beweglichen Teile 2.2 der zu überwachenden Vorrichtung 2.1 in ein kapazitives Sensorfeld erreicht werden.

Die sektorförmige Ausbildung 2.3 des kapazitiven Sensorsystems 1.4 erlaubt darüber hinaus ein selektives Ausblenden einzelner Sektoren 2.3, so dass im Falle einer erlaubten Annäherung von beweglichen Teilen 2.2 der Vorrichtung 2.1 kein ungewolltes Steuersignal ausgelöst wird.

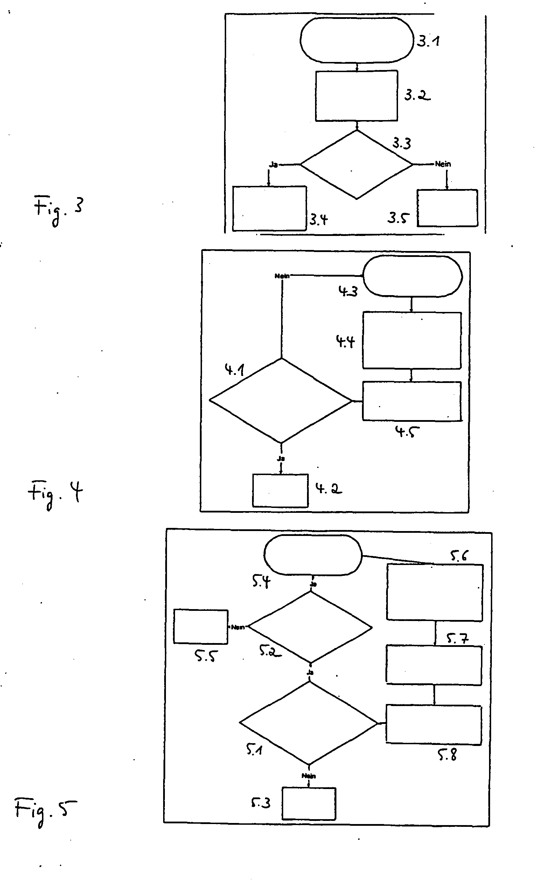

Figur 3 zeigt das Ablaufdiagramm eines erfindungsgemäßen Sicherheitsprogramms zur zyklischen (Selbst-)Kontrolle aller Sensorflächen der Sicherheitseinrichtung.

Eine Kontrolle der Sensorflächen erfolgt im Rahmen einer Kontrollfahrt, z.B. durch Annähern eines Probekörpers. Der Start dieser Kontrollfahrt erfolgt in regelmäßigen zeitlichen Abständen, z.B. alle 24 Stunden 3.1. Dabei löst die Vorrichtung 2.1 bewusst die Sicherheitsfunktion aus 3.2. Anschließend erfolgt eine Überprüfung 3.3, ob die Sicherheitseinrichtungen korrekt reagieren. Ist dies der Fall, so ist die Vorrichtung 2.1 bereit für einen Automatikbetrieb 3.4. Im Falle fehlerhaft reagierender Sicherheitseinrichtungen erfolgt eine Fehlermeldung 3.5.

Figur 4 zeigt das Ablaufdiagramm der Überwachung eines Bewegungszustands der Vorrichtung 2.1 durch das erfindungsgemäße Motorstrom-Überwachungssystem.

Hierzu erfolgt zunächst eine Messung der in der Vorrichtung real auftretenden Motorströme 4.5. Die gemessenen Motorströme zuzüglich entsprechender Toleranzen werden anschließend mit den theoretisch zu erwartenden Motorströmen verglichen 4.1, so dass im Falle einer zu großen Abweichung eine Fehlermeldung erfolgt 4.2. Ist eine solche Abweichung hier nicht gegeben, wird die Bewegung der Vorrichtung fortgeführt 4.3 und theoretisch auftretende Motorströme eines nächsten Bewegungsabschnitts werden anhand eines mathematischen Modells berechnet 4.4.

Die im Falle einer Abweichung der gemessenen Motorströme von den theoretisch zu erwartenden erfolgte Fehlermeldung 4.2 kann darüber hinaus zum Stoppen einer gefahrbringenden Bewegung oder zum Einleiten einer entsprechenden Gegenbewegung verwendet werden.

Figur 5 zeigt das Ablaufdiagramm einer kombinierten Bewegungsüberwachung der Vorrichtung 2.1 durch das in Figur 4 dargestellte Motorstrom-Überwachungssystem und eine zusätzlich vorhandene Kraft-Momenten-Sensorik.

Die kombinierte Bewegungsüberwachung umfasst eine Messung der real auftretenden Motorströme 5.7 sowie eine Messung der Kräfte und Momente an einem Endeffektor (Kraft-Momenten-Sensor) 5.8, auf deren Grundlage zunächst ein Vergleich der theoretisch erwarteten mit den gemessenen Motorströmen erfolgt 5.1. Liegt die Abweichung in einem Toleranzbereich, erfolgt anschließend eine Überprüfung der Kräfte und Momente am Endeffektor 5.2. Im Falle einer zu starken Abweichung der gemessenen von den theoretischen Motorströmen erfolgt eine Fehlermeldung 5.3. Eine entsprechende Fehlermeldung 5.5 erfolgt bei zu großen Kräften bzw. Momenten am Endeffektor 5.2. Dagegen wird die Bewegung der Vorrichtung fortgeführt 5.4, wenn sowohl die gemessenen Motorströme als auch die gemessenen Kräfte und Momente im jeweiligen Toleranzbereich liegen. Das Fortführen der Bewegung ist verbunden mit einer Berechnung der in den Motoren der Vorrichtung 2.1 zu erwartenden Motorströme anhand eines mathematischen Modells 5.6.

## Patentansprüche

1. Sicherheitseinrichtung für Vorrichtungen mit frei im Raum beweglichen Teilen, insbesondere für Handhabungsgeräte wie Industrieroboter oder führerlose Transportgeräte, mit Schaltmitteln, die bei Kollision der bewegten Teile mit Personen oder Gegenständen ein Steuersignal bewirken, durch das die bewegten Teile stillsetzbar oder ein eine der Annäherungsbewegung entgegengesetzte Bewegungsfolge bewirkendes Notlaufprogramm in Gang setzbar sind, und mit einem aus Lichtwellenleitern gebildeten taktilen Sensorsystem, das auf beweglichen Teilen (2.2) der Vorrichtung (2.1) angeordnet ist, **dadurch gekennzeichnet, dass** das taktile Sensorsystem (1.2) ab einer Krafteinwirkung von 0,5 bis 1,5 N, insbesondere von 1 N anspricht.

2. Sicherheitseinrichtung nach Anspruch 1, **dadurch gekennzeichnet, dass** das taktile Sensorsystem (1.2) direkt auf Gehäuseteilen (1.1) der Vorrichtung (2.1) angeordnet ist.

3. Sicherheitseinrichtung nach Anspruch 2, **dadurch gekennzeichnet, dass** das taktile Sensorsystem (1.2) nach außen durch eine stoßdämpfende teilelastische Schicht (1.3) gegen mechanische Einwirkungen geschützt ist.

4. Sicherheitseinrichtung nach Anspruch 1, **dadurch gekennzeichnet, dass** das taktile Sensorsystem (1.2) außerhalb der die Gehäuseteile (1.1) umgebenden stoßdämpfenden teilelastischen Schicht (1.3) auf dieser angeordnet ist.

5. Sicherheitseinrichtung nach Anspruch 3 oder 4, **dadurch gekennzeichnet, dass** die stoßdämpfende teilelastische Schicht (1.3) aus einem Material mit einem mechanischen Wirkungsgrad zwischen 0,5 und 0,7, insbesondere mit einem mechanischen Wirkungsgrad von 0,6 besteht, wobei das Material Dämpfungs- und Federeigenschaften besitzt.

6. Sicherheitseinrichtung nach einem der Ansprüche 3 bis 5, **dadurch gekennzeichnet, dass** die stoßdämpfende teilelastische Schicht (1.3) aus Polyurethan-Weichschaum besteht.

7. Sicherheitseinrichtung nach einem der vorangehenden Ansprüche, **gekennzeichnet durch** ein berührungsloses Sensorsystem (1.4).

8. Sicherheitseinrichtung nach Anspruch 7, **dadurch gekennzeichnet, dass** das weitere berührungslose Sensorsystem (1.4) als kapazitives Sensorsystem mit mindestens einem aus zwei oder mehr Elektroden gebildeten Sensorelement (2.3) ausgebildet ist.

9. Sicherheitseinrichtung nach Anspruch 7 oder 8, **dadurch gekennzeichnet, dass** durch das kapazitive Sensorsystem Menschen und andere Objekte mit einer Permittivitätszahl ≥ 30, insbesondere im Bereich von 50 detektierbar sind.

10. Sicherheitseinrichtung nach Anspruch 8 oder 9, **dadurch gekennzeichnet, dass** die Sensorelemente (2.3) jeweils drei Elektroden aufweisen, die als geerdete Elektrode, Sensorelektrode und zwischen letzteren angeordnete Schirmelektrode ausgebildet sind.

11. Sicherheitseinrichtung nach einem der Ansprüche 8 bis 10, **dadurch gekennzeichnet, dass** das kapazitive Sensorsystem (1.4) mehrere flächige Sensorelemente (2.3) mit entsprechenden flächenelektroden aufweist.

12. Sicherheitseinrichtung nach Anspruch 11, **dadurch gekennzeichnet, dass** die Sensorelemente (2.3) sektorförmig unterteilt sind.

13. Sicherheitseinrichtung nach einem der Ansprüche 8 bis 12, **dadurch gekennzeichnet, dass** die Sensorelemente (2.3) einzeln oder in Gruppen, insbesondere bei einer erlaubten Annäherung sicherheitsrelevanter Bauteile (2.2), ausblendbar sind.

14. Sicherheitseinrichtung nach einem der Ansprüche 8 bis 13, **dadurch gekennzeichnet, dass** die Elektroden mindestens eines Sensorelementes asymmetrisch angeordnet sind.

15. Sicherheitseinrichtung nach einem der Ansprüche 8 bis 14, **dadurch gekennzeichnet, dass** mindestens ein Sensorelement eine aufgebördelte Schirmelektrode aufweist.

16. Sicherheitseinrichtung nach einem der Ansprüche 8 bis 15, **dadurch gekennzeichnet, dass** bei Verwendung mehrerer Sensorelemente zumindest die bewegten Teile (2.2) der Vorrichtung (2.1) in ein geschlossenes Sensorfeld gehüllt sind.

17. Sicherheitseinrichtung nach einem der Ansprüchen 8 bis 16, **dadurch gekennzeichnet, dass** die Bestandteile eines jeweiligen Sensorelements ganz oder teilweise außerhalb des Gehäuses (1.1) der Vorrichtung (2.1) angeordnet sind.

18. Sicherheitseinrichtung nach einem der Ansprüche 8 bis 16, **dadurch gekennzeichnet, dass** die Bestandteile eines jeweiligen Sensorelemente vollständig innerhalb des Gehäuses (1.1) der Vorrichtung (2.1) angeordnet sind.

19. Sicherheitseinrichtung nach Anspruch 17 oder 18, **dadurch gekennzeichnet, dass** das Gehäuse (1.1) aus einem Material mit niedriger Permittivitätszahl besteht.

20. Sicherheitseinrichtung nach Anspruch 19, **dadurch gekennzeichnet, dass** das Gehäuse (1.1) aus Kunststoff besteht.

21. Sicherheitseinriehtung nach einem der Ansprüche 3 bis 20, **dadurch gekennzeichnet, dass** die Anordnung des taktilen sensorsystems (1.2), des kapazitiven Sensorsystems (1.4) und der stoßdämpfenden teilelastischen Schicht (1.3) in Form von jeweils lokal zum Gehäuse (1.3) planparallelen Schichten erfolgt, deren Abfolge auch bezüglich des Gehäuses (1.1) beliebig variieren kann.

22. Sicherheitseinrichtung nach einem der vorangehenden Ansprüche, **dadurch gekennzeichnet, dass** die beiden unabhängigen Sensorsysteme (1.2, 1.4) direkt in einen NOT.AUS-Kreis der Vorrichtung (2.1) eingreifen.

23. Sicherheitseinrichtung nach einem der vorangehenden Ansprüche, **dadurch gekennzeichnet, dass** alle Sensorflächen (2.3) durch Abfahren eines Sicherheitsprogramms, insbesondere durch Annähern eines Probekörpers im Zuge einer Kontrollfahrt, zyklisch (selbst-)kontrollierbar sind.

24. Sicherheitseinrichtung nach einem der vorangehenden Ansprüche, **dadurch gekennzeichnet, dass** das taktile (1.2) und das kapazitive Sensorsystem (1.4) mit einem dritten System, das als Motorstrom-Überwachungssystem zur Überwachung von Motorströmen in zum Bewegen der bewegten Teile (2.2) in der Vorrichtung (2.1) vorhandenen Elektromotoren ausgebildet ist und durch das bei Kollision der bewegten Teile (2.2) mit Personen oder Gegenständen das Steuersignal auslösbar ist, kombiniert sind.

25. Sicherheitseinrichtung nach einem der vorangehenden Ansprüche, **dadurch gekennzeichnet, dass** die vorhandenen Sensor- bzw. Überwachungssysteme mit mindestens einem Kraft-Momenten-Sensor kombiniert sind, durch den bei Kollisionen der bewegten Teile (2.2) mit Personen oder Gegenständen das Steuersignal auslösbar ist.

26. Sicherheitseinrichtung nach Anspruch 25, **dadurch gekennzeichnet, dass** die Kraft-Momenten-Sensoren zwischen der Vorrichtung (2.1) und an der Vorrichtung (2.1) angeordneten Werkzeugen vorgesehen sind.

27. Verfahren zum Sichern von Vorrichtungen (2.1) mit frei im Raum beweglichen Teilen, insbesondere für Handhabungsgeräte wie Industrieroboter oder führerlose Transportgeräte, mit einer Sicherheitseinrichtung nach einem der vor herphenalen Anspruch, wobei bei Berührung eines beweglichen Teils (2.2) der Vorrichtung (2.1) eine durch auf diesem Teil (2.2) angeordnete, ein taktiles Sensorsystem (1.2) bildende Lichtwellenleiter geführte elektromagnetische Strahlung beeinflusst wird, wodurch mindestens ein Steuersignal zum Veranlassen mindestens einer sicherheitsrelevanten Aktion bewirkt wird.

28. Verfahren nach Anspruch 27, **dadurch gekennzeichnet, dass** das Annähern eines Objektes oder einer Person an ein bewegliches Teil (2.2) der Vorrichtung (2.1) vor einer Berührung durch ein zusätzliches berührungsloses Sensorsystem (1.4) detektiert wird, wobei ein Steuersignal zum Veranlassen mindestens einer sicherheitsrelevanten Aktion bewirkt wird.

29. Verfahren nach Ansprüche 28, **dadurch gekennzeichnet, dass** das Steuersignal durch eine Veränderung der Kapazität mindestens eines auf dem Teil (2.2) angeordneten Kondensators, der Bestandteil eines kapazitiven Sensorsystems (1.4) ist, bewirkt wird.

30. Verfahren nach Anspruch 28 oder 29, **dadurch gekennzeichnet, dass** die sicherheitsrelevante Aktion durch das Steuersignal des taktilen Sensorsystems (1.2) und das Steuersignal des kapazitiven Sensorsystems (1.4) im Sinne einer logischen ODER-Verknüpfung der beiden Steuersignale veranlasst wird.

31. Verfahren nach einem der Ansprüche 28 bis 30, **dadurch gekennzeichnet, dass** mindestens ein Bereich (2.3) des kapazitiven Sensorsystems (1.4) ausgeblendet wird, so dass trotz einer erfolgten Annäherung kein Steuersignal ausgelöst wird.

32. Verfahren nach einem der Ansprüche 28 bis 31, **dadurch gekennzeichnet, dass** durch das kapazitive Sensorsystem (1.4) Gegenstände und Personen mit einer hohen Permittivitätszahl detektiert werden.

33. Verfahren nach einem der Ansprüche 28 bis 32, **dadurch gekennzeichnet, dass** durch das kapazitive Sensorsystem (1.4) Gegenstände und Personen mit einer Permittivitätszahl ≥ 30, insbesondere im Bereich von 50, detektiert werden.

34. Verfahren nach einem der Ansprüche 28 bis 33, **dadurch gekennzeichnet, dass** durch eine Richtwirkung der Elemente des kapazitiven Sensorsystems (1.4) im wesentlichen keine Bestandteile der Vorrichtung (2.1) selbst detektiert werden.

35. Verfahren nach einem der Ansprüche 27 bis 34, **dadurch gekennzeichnet, dass** eine Kollision eines beweglichen Teils (2.2) der Vorrichtung (2.1) mit einem Objekt oder einer Person durch ein zusätzliches Motorstrom-tlberwachungssystem detektiert wird, das nach einer Messung von Strömen in den beweglichen Teilen (2.2) der Vorrichtung (2.1) zugeordneten Elektromotoren und nach einem Vergleich der Messung mit theoretisch zu erwartenden Strömen bei einer bestimmten Abweichung das Steuersignal bewirkt.

36. Verfahren nach Anspruch 35, **dadurch gekennzeichnet, dass** eine Kollision durch mindestens einen zusätzlichen Kraft-Momenten-Sensor detektiert wird, der bei einem Auftreten unüblicher Kräfte und/oder Momente das Steuersignal bewirkt.

37. Verfahren nach Ansprüche 36, **dadurch gekennzeichnet, dass** die sicherheitsrelevante Aktion durch das Steuersignal des Motorstrom-Überwachungssystems und der Kraft-Momenten-Sensorik im Sinne einer logischen ODER-Verknüpfung der beiden Steuersignale veranlasst wird.

38. Verfahren nach einem der Ansprüche 27 bis 37, **dadurch gekennzeichnet, dass** durch das Steuersignal eine oder mehrere der folgenden sicherheitsrelevanten Aktionen:
a) Stillsetzen der Vorrichtung (2.1);
b) Einleiten einer der Kollisionsbewegung entgegengesetzten Bewegungsfolge oder
c) Auslösen eines optischen und/oder akustischen Alarms
ausgelöst wird bzw. werden.

## Claims

1. Safety device for apparatuses with components which are freely movable in space, in particular for manipulators like industrial robots or driverless transport devices, with switching means triggering, in the case of a collision of the movable components with persons or objects, a control signal by which the movable components can be stopped or an emergency operation program triggering a movement sequence which is opposite to the approaching movement can be launched, and with a tactile sensor system which is formed of optical fibers and is arranged on movable parts (2.2) of the apparatus (2.1), **characterized in that** the tactile sensor system (1.2) responds from an application of a force of 0.5 to 1.5 N, in particular of 1 N, onwards.

2. Safety device according to claim 1, **characterized in that** the tactile sensor system (1.2) is directly arranged on housing parts (1.1) of the apparatus (2.1).

3. Safety device according to claim 2, **characterized in that** the tactile sensor system (1.2) is guarded to the exterior by a shock-absorbing, partially elastic layer (1.3) against mechanical impacts.

4. Safety device according to claim 1, **characterized in that** the tactile sensor system (1.2) is arranged outside the shock-absorbing, partially elastic layer (1.3) surrounding the housing parts (1.1) on this layer.

5. Safety device according to claim 3 or 4, **characterized in that** the shock-absorbing, partially elastic layer (1.3) consists of a material with a mechanical degree of efficiency between 0.5 and 0.7, in particular with a mechanical degree of efficiency of 0.6, the material having absorbing and resilience properties.

6. Safety device according to one of claims 3 to 5, **characterized in that** the shock-absorbing, partially elastic layer (1.3) consists of polyurethane soft foam.

7. Safety device according to one of the preceding claims, **characterized by** a contactless sensor system (1.4).

8. Safety device according to claim 7, **characterized in that** the additional contactless sensor system (1.4) is designed as a capacitive sensor system with at least one sensor element (2.3) being formed of two or more electrodes.

9. Safety device according to claim 7 or 8, **characterized in that** human beings and other objects with a permittivity number ≥ 30, in particular in the range of 50, are detectable by the capacitive sensor system.

10. Safety device according to claim 8 or 9, **characterized in that** the sensor elements (2.3) have three electrodes each, designed as a grounded electrode, a sensor electrode and a shield electrode arranged between the latter two.

11. Safety device according to one of the claims 8 to 10, **characterized in that** the capacitive sensor system (1.4) has several two-dimensional sensor elements (2.3) with corresponding two-dimensional electrodes.

12. Safety device according to claim 11, **characterized in that** the sensor elements (2.3) are subdivided in a sector-shaped way.

13. Safety device according to one of claims 8 to 12, **characterized in that** the sensor elements (2.3) can be masked out separately or in groups, in particular in the case of a permitted approach of safety-relevant components (2.2).

14. Safety device according to one of claims 8 to 13, **characterized in that** the electrodes of at least one sensor element are asymmetrically arranged.

15. Safety device according to one of claims 8 to 14, **characterized in that** at least one sensor element has a shield electrode beaded onto it.

16. Safety device according to one of claims 8 to 15, **characterized in that**, in the case of using several sensor elements, at least the moved parts (2.2) of the apparatus (2.1) are enveloped in a closed sensor field.

17. Safety device according to one of claims 8 to 16, **characterized in that** the components of a respective sensor element are completely or partially arranged outside the housing (1.1) of the apparatus (2.1).

18. Safety device according to one of claims 8 to 16, **characterized in that** the components of a respective sensor element are completely arranged within the housing (1.1) of the apparatus (2.1).

19. Safety device according to claim 17 or 18, **characterized in that** the housing (1.1) consists of a material with a low permittivity number.

20. Safety device according to claim 19, **characterized in that** the housing (1.1) consists of plastic.

21. Safety device according to one of claims 3 to 20, **characterized in that** the arrangement of the tactile sensor system (1.2), the capacitive sensor system (1.4) and the shock-absorbing, partially elastic layer (1.3) is carried out in the form of layers each of which is parallel locally to the housing (1.3), the sequence of which layers can arbitrarily vary with respect to the housing (1.1).

22. Safety device according to one of the preceding claims, **characterized in that** the two independent sensor systems (1.2, 1.4) directly engage into an emergency stop circuit of the apparatus (2.1).

23. Safety device according to one of the preceding claims, **characterized in that** all sensor surfaces (2.3) are cyclically (self-)controllable by driving a safety program, in particular by approaching a test body in the course of a control drive.

24. Safety device according to one of the preceding claims, **characterized in that** the tactile (1.2) and the capacitive sensor system (1.4) are combined with a third system, which is designed as a motor current monitoring system for monitoring motor currents in electric motors which are present for moving the movable components (2.2) in the apparatus (2.1), and by which the control signal can be triggered in the case of a collision of the moved parts (2.2) with persons or objects.

25. Safety device according to one of the preceding claims, **characterized in that** the present sensor or monitoring systems, resp., are combined with at least one force moment sensor, by which the control signal can be triggered in the case of collisions of the moved components (2.2) with persons or objects.

26. Safety device according to claim 25, **characterized in that** the force moment sensors are provided between the apparatus (2.1) and tools arranged at the apparatus (2.1).

27. Method for securing apparatuses (2.1) with components which are freely movable in space, in particular for manipulators like industrial robots or driverless transport devices, with a safety device according to one of the preceding claims, in which method, when a movable component (2.2) of the apparatus (2.1) is touched, an electromagnetic radiation which is conducted by optical fibers being arranged on this component (2.2) and forming a tactile sensor system (1.2) is influenced, whereby at least one control signal for triggering at least one security-relevant action in caused.

28. Method according to claim 27, **characterized in that** the approach of an object or a person toward a movable component (2.2) of the apparatus (2.1) is detected by an additional contactless sensor system (1.4) before a contact, in which case a control signal for triggering at least one security-relevant action is caused.

29. Method according to claim 28, **characterized in that** the control signal is caused by a change of the capacity of at least one capacitor which is arranged on the component (2.2) and which is part of a capacitive sensor system (1.4).

30. Method according to claim 28 or 29, **characterized in that** the safety-relevant action is triggered by the control signal of the tactile sensor system (1.2) and the control signal of the capacitive sensor system (1.4) in the sense of a logical OR connection of the two control signals.

31. Method according to one of claims 28 to 30, **characterized in that** at least one range (2.3) of the capacitive sensor system (1.4) is masked out, such that no control signal is triggered in spite of an approach having occurred.

32. Method according to one of claims 28 to 31, **characterized in that** objects and persons with a high permittivity number are detected by the capacitive sensor system (1.4).

33. Method according to one of claims 28 to 32, **characterized in that** objects and persons with a permittivity number ≥ 30, in particular in the range of 50, are detected by the capacitive sensor system (1.4).

34. Method according to one of claims 28 to 33, **characterized in that**, due to a directivity of the elements of the capacitive sensor system (1.4), substantially no parts of the apparatus (2.1) itself are detected.

35. Method according to one of claims 27 to 34, **characterized in that** a collision of a movable component (2.2) of the apparatus (2.1) with an object or a person is detected by an additional motor current monitoring system which causes the control signal after measuring currents in electromotors which are assigned to the movable components (2.2) of the apparatus (2.1) and after comparing the measurement to currents theoretically to be expected when a certain deviation occurs.

36. Method according to claim 35, **characterized in that** a collision is detected by at least one additional force moment sensor which causes the control signal when unusual forces and/or moments occur.

37. Method according to claim 36, **characterized in that** the safety-relevant action is triggered by the control signal of the motor current monitoring system and the force moment sensor equipment in the sense of a logical OR connection of the two control signals.

38. Method according to one of claims 27 to 37, **characterized in that** one or more of the following safety-relevant actions is or are triggered by the control signal:
a) stopping the apparatus (2.1);
b) initiating a movement sequence which is opposed to the collision movement or
c) triggering an optical and/or acoustical alarm.

## Revendications

1. Dispositif de sécurité pour des dispositifs avec des parties librement mobiles dans l'espace, en particulier pour des appareils de manutention, tels que des robots industriels ou pour des appareils de transport sans conducteur, comportant des moyens de commutation qui, en cas de collision des parties mobiles avec des personnes ou des objets, génèrent un signal de commande, par lequel les parties mobiles peuvent être immobilisées ou un programme d'urgence peut être mis en marche pour provoquer une succession de mouvements opposés au mouvement d'approche, et comportant un système de détection tactile, formé par des guides d'ondes optiques, qui est agencé sur des parties mobiles (2.2) du dispositif (2.1), **caractérisé en ce que** le système de détection tactile (1.2) réagit à partir d'une application de force de 0,5 à 1,5 N, en particulier de 1 N.

2. Dispositif de sécurité selon la revendication 1, **caractérisé en ce que** le système de détection tactile (1.2) est agencé directement sur des parties du carter (1.1) du dispositif (2.1).

3. Dispositif de sécurité selon la revendication 2, **caractérisé en ce que** le système de détection tactile (1.2) est protégé vers l'extérieur contre les influences mécaniques par une couche (1.3) partiellement élastique amortissant les chocs.

4. Dispositif de sécurité selon la revendication 1, **caractérisé en ce que** le système de détection tactile (1.2) est agencé à l'extérieur de la couche (1.3) partiellement élastique amortissant les chocs et entourant les parties du carter (1.1), sur ladite couche.

5. Dispositif de sécurité selon la revendication 3 ou 4, **caractérisé en ce que** la couche (1.3) partiellement élastique, amortissant les chocs est réalisée dans un matériau avec un rendement mécanique entre 0,5 et 0,7, en particulier avec un rendement mécanique de 0,6, ledit matériau possédant des propriétés d'amortissement et de ressort.

6. Dispositif de sécurité selon l'une quelconque des revendications 3 à 5, **caractérisé en ce que** la couche (1.3) partiellement élastique amortissant les chocs est réalisée en mousse souple de polyuréthanne.

7. Dispositif de sécurité selon l'une quelconque des revendications précédentes, **caractérisé par** un système de détection sans contact (1.4).

8. Dispositif de sécurité selon la revendication 7, **caractérisé en ce que** le système de détection sans contact (1.4) supplémentaire est réalisé sous la forme d'un système de détection capacitif avec au moins un élément de détection (2.3) formé par deux électrodes ou plus.

9. Dispositif de sécurité selon la revendication 7 ou 8, **caractérisé en ce que** le système de détection capacitif permet de détecter des personnes ou d'autres objets avec une permittivité relative ≥ 30, en particulier dans la plage de 50.

10. Dispositif de sécurité selon la revendication 8 ou 9, **caractérisé en ce que** les éléments de détection (2.3) comportent chacun trois électrodes, qui sont réalisées sous forme d'électrodes reliées à la terre, d'électrodes de détection et d'électrode de protection agencée entre ces dernières.

11. Dispositif de sécurité selon l'une quelconque des revendications 8 à 10, **caractérisé en ce que** le système de détection capacitif (1.4) comporte plusieurs éléments de détection (2.3) plans avec des électrodes planes correspondantes.

12. Dispositif de sécurité selon la revendication 11, **caractérisé en ce que** les éléments de détection (2.3) sont subdivisés en forme de secteurs.

13. Dispositif de sécurité selon l'une quelconque des revendications 8 à 12, **caractérisé en ce que** les éléments de détection (2.3) peuvent être masqués individuellement ou en groupes, en particulier en présence d'une approche autorisée de pièces (2.2) significatives pour la sécurité.

14. Dispositif de sécurité selon l'une quelconque des revendications 8 à 13, **caractérisé en ce que** les électrodes d'au moins un élément de détection sont agencées asymétriquement.

15. Dispositif de sécurité selon l'une quelconque des revendications 8 à 14, **caractérisé en ce qu'**au moins un élément de détection comporte une électrode de protection repliée sur l'élément de détection.

16. Dispositif de sécurité selon l'une quelconque des revendications 8 à 15, **caractérisé en ce que**, en cas d'utilisation de plusieurs éléments de détection, au moins les parties mobiles (2.2) du dispositif (2.1) sont enveloppées dans un champ de détection fermé.

17. Dispositif de sécurité selon l'une quelconque des revendications 8 à 16, **caractérisé en ce que** les composants d'un élément de détection respectif sont agencés en totalité ou en partie en dehors du carter (1.1) du dispositif (2.1).

18. Dispositif de sécurité selon l'une quelconque des revendications 8 à 16, **caractérisé en ce que** les composants d'un élément de détection respectif sont agencés entièrement à l'intérieur du carter (1.1) du dispositif (2.1).

19. Dispositif de sécurité selon la revendication 17 ou 18, **caractérisé en ce que** le carter (1.1) est réalisé dans un matériau avec une faible permittivité relative.

20. Dispositif de sécurité selon la revendication 19, **caractérisé en ce que** le carter (1.1) est réalisé en matière plastique.

21. Dispositif de sécurité selon l'une quelconque des revendications 3 à 20, **caractérisé en ce que** l'agencement du système de détection tactile (1.2), du système de détection capacitif (1.4) et de la couche (1.3) partiellement élastique amortissant les chocs, est réalisé sous la forme de couches, qui sont chacune planes et parallèles localement par rapport au carter (1.3) et dont la succession par rapport au carter (1.1) est variable au choix.

22. Dispositif de sécurité selon l'une quelconque des revendications précédentes, **caractérisé en ce que** les deux systèmes de détection (1.2, 1.4) indépendants l'un de l'autre interviennent directement dans un circuit d'arrêt d'urgence du dispositif (2.1).

23. Dispositif de sécurité selon l'une quelconque des revendications précédentes, **caractérisé en ce que** toutes les surfaces de détection (2.3) peuvent être contrôlées (automatiquement) cycliquement par le déroulement d'un programme de sécurité, en particulier par l'approche d'un corps d'échantillon au cours d'une marche de contrôle.

24. Dispositif de sécurité selon l'une quelconque des revendications précédentes, **caractérisé en ce que** le système de détection tactile (1.2) et le système de détection capacitif (1.4) sont combinés à un troisième système, qui est réalisé sous la forme d'un système de surveillance, destiné à surveiller les courants dans des moteurs électriques présents pour le déplacement des parties mobiles (2.2) dans le dispositif (2.1), et qui peut être déclenché par le signal de commande délivré en cas de collision des parties mobiles (2.2) avec des personnes ou des objets.

25. Dispositif de sécurité selon l'une quelconque des revendications précédentes, **caractérisé en ce que** les systèmes de détection et les systèmes de surveillance présents sont combinés à au moins un capteur du moment d'une force, par lequel le signal de commande peut être délivré en cas de collision des parties mobiles (2.2) avec des personnes ou des objets.

26. Dispositif de sécurité selon la revendication 25, **caractérisé en ce que** les capteurs du moment d'une force sont prévus entre le dispositif (2.1) et sur des outils montés sur le dispositif (2.1).

27. Procédé pour sécuriser des dispositifs (2.1) ayant des parties librement mobiles dans l'espace, en particulier pour des appareils de manutention, tels que des robots industriels ou pour des appareils de transport sans conducteur, comportant un dispositif de sécurité selon l'une quelconque des revendications précédentes, dans lequel procédé, en cas de contact avec une partie mobile (2.2) du dispositif (2.1), une influence est exercée sur un rayonnement électromagnétique, guidé par un conducteur d'ondes optiques formant un système de détection tactile (1.2) et agencé sur ladite partie mobile (2.2), moyennant quoi au moins un signal de commande est délivré pour induire au moins une action significative pour la sécurité.

28. Procédé selon la revendication 27, **caractérisé en ce que** l'approche d'un objet ou d'une personne vers une partie mobile (2.2) du dispositif (2.1) est détectée avant un contact par un système de détection sans contact (1.4) supplémentaire, un signal de commande étant délivré pour induire au moins une action significative pour la sécurité.

29. Procédé selon la revendication 28, **caractérisé en ce que** le signal de commande est généré par une variation de la capacité d'au moins un condensateur, qui est agencé sur la partie (2.2) et qui fait partie intégrante d'un système de détection capacitif (1.4).

30. Procédé selon la revendication 28 ou 29, **caractérisé en ce que** l'action significative pour la sécurité est induite par le signal de commande du système de détection tactile (1.2) et le signal de commande du système de détection capacitif (1.4) dans le sens d'une opération OU logique des deux signaux de commande.

31. Procédé selon l'une quelconque des revendications 28 à 30, **caractérisé en ce que** ladite au moins une zone (2.3) du système de détection capacitif (1.4) est masquée de telle sorte qu'aucun signal de commande n'est généré malgré la présence d'une approche.

32. Procédé selon l'une quelconque des revendications 28 à 31, **caractérisé en ce que** des objets et des personnes avec une permittivité relative élevée sont détectés par le système de détection capacitif (1.4).

33. Procédé selon l'une quelconque des revendications 28 à 32, **caractérisé en ce que** des objets et des personnes avec une permittivité relative ≥ 30, en particulier dans la plage de 50, sont détectés par le système de détection capacitif (1.4).

34. Procédé selon l'une quelconque des revendications 28 à 33, **caractérisé en ce que** par un effet directif des éléments du système de détection capacitif (1.4), sensiblement aucun composant du dispositif (2.1) lui-même n'est détecté.

35. Procédé selon l'une quelconque des revendications 27 à 34, **caractérisé en ce qu'**une collision d'une partie mobile (2.2) du dispositif (2.1) avec un objet ou une personne est détectée par un système de surveillance supplémentaire des courants des moteurs, lequel, après avoir mesuré les courants dans les moteurs électriques associés aux parties mobiles (2.2) du dispositif (2.1) et après une comparaison de la mesure avec des courants à escompter théoriquement, génère un signal de commande dans le cas d'une divergence déterminée.

36. Procédé selon la revendication 35, **caractérisé en ce qu'**une collision est détectée par au moins un capteur du moment d'une force supplémentaire qui génère le signal de commande lorsque se produisent des forces et/ou des moments inhabituels.

37. Procédé selon la revendication 36, **caractérisé en ce que** l'action significative pour la sécurité est induite par le signal de commande du système de surveillance des courants des moteurs et par les capteurs du moment d'une force dans le sens d'une opération OU logique des deux signaux de commande.

38. Procédé selon l'une quelconque des revendications 27 à 37, **caractérisé en ce qu'**une ou plusieurs des actions suivantes, significatives pour la sécurité :
a) immobilisation du dispositif (2.1),
b) introduction d'une suite de mouvements opposés au mouvement de collision, ou
c) déclenchement d'une alarme optique et/ou acoustique,
est ou sont déclenchée(s) par le signal de commande.
